# FASCICULE DE BREVET EUROPEEN

(11) **EP 0 974 296 B1**
(45) Date de publication et mention de la délivrance du brevet: **12.06.2002**
(21) Numéro de dépôt: 99401612.9
(22) Date de dépôt: 28.06.1999
(51) Int. Cl.: A47J 27/10, A47J 37/06, A47J 27/21

(54) **Appareil électrique de cuisson du type barbecue**
Elektrisches Kochgerät vom Barbecue-Typ
Electric cooking utensil of the barbecue type

(30) Priorité: 24.07.1998 FR 9809507
(43) Date de publication de la demande: 26.01.2000
(73) Titulaire: SEB S.A., 69130 Ecully (FR)
(72) Inventeur: Betend-Bon, Alain, 74000 Annecy (FR)
(74) Mandataire: Keib, Gérard

(56) Documents cités:
- EP-A- 0 818 168
- FR-A- 2 670 274
- GB-A- 1 408 387
- US-A- 3 539 774

## Description

La présente invention concerne un appareil électrique de cuisson comprenant une grille de support des aliments à cuire, une résistance électrique chauffante s'étendant sous la grille, un récipient métallique de collecte des jus de cuisson disposé sous la résistance et une base servant à supporter la grille, la résistance et le récipient de collecte.

L'appareil électrique de cuisson concerné peut être un barbecue utilisé à l'air libre ou servir de gril d'intérieur. Pour la sécurité de l'utilisateur, la base de support doit être en une matière thermiquement isolante, afin de prévenir tout risque de brûlure.

La base est donc généralement réalisée en une matière plastique, laquelle doit également résister à la chaleur dégagée par l'appareil ; il s'agit notamment de la chaleur rayonnée par la résistance chauffante, mais aussi de la chaleur transmise par le récipient et la grille métalliques en contact avec ladite base. Les conditions d'un support stable et thermo-isolant sont constituées pour la base au prix d'un coût relativement élevé, celui de la matière première présentant les qualités correspondantes de résistance mécanique et thermique ainsi que d'isolation.

L'invention se propose donc de réaliser un appareil du type précité, dont la base présente les qualités requises de stabilité, de résistance et d'isolation thermiques, en particulier soit capable de supporter la chaleur rayonnée par la résistance chauffante, alors même que la matière première utilisée pour la base ne répond pas à l'ensemble de ces critères de qualité.

On connaît par ailleurs, par le document FR-A-2 670 274, un appareil électrique de cuisson selon le préambule de la revendication 1, qui est muni d'un récipient de collecte de jus de cuisson possédant des parois internes ayant des propriétés reflectrices. Afin d'empêcher la combustion des graisses entrant en contact avec ces parois, tout en conservant les propriétés reflectrices de ces parois internes, le réflecteur est refroidi par de l'eau en contact avec ses parois externes.

Conformément à l'invention, l'appareil électrique de cuisson du type considéré, c'est-à-dire comprenant une grille de support des aliments à cuire, une résistance électrique chauffante s'étendant sous la grille, un récipient métallique de collecte des jus de cuisson disposé sous la résistance, dont les parois intérieures ont des propriétés réflectrices, et une base en matière thermiquement isolante pour supporter la grille, la résistance et le récipient de collecte, est caractérisé en ce que le récipient contient, lorsque l'appareil est en service, une certaine quantité d'eau, en ce que la base entoure la paroi latérale du récipient et est en une matière plastique qui ne supporte pas en continu la chaleur rayonnée par la résistance et en ce que la périphérie du fond du récipient repose directement sur un ou plusieurs épaulements formés dans la base.

La présence d'eau dans le récipient permet de limiter la montée en température de ses parois métalliques. On est ainsi assuré que la température atteinte par les parois du récipient ne dépassera pas celle de l'ébullition de l'eau contenue, soit environ 100°C. La présence d'eau dans le récipient métallique est en outre compatible avec sa fonction de collecteur des jus de cuisson. D'autre part, la disposition d'une base entourant la paroi latérale du récipient, la périphérie du fond de ce dernier reposant directement sur un ou plusieurs épaulements de la base, assure la protection de l'utilisateur tout en limitant le contact entre le récipient métallique et la base en matière plastique. Cette dernière, nécessairement thermo-isolante, peut ainsi être choisie dans une gamme ne supportant pas en continu la chaleur rayonnée par la résistance, pourvu qu'elle présente les qualités de résistance mécanique permettant à la base de remplir sa fonction de support.

La base sera par exemple réalisée en polypropylène, matière plastique qui présente de nombreux avantages, rigidité et coût peu élevé notamment, mais ne supportant pas en continu une température supérieure à environ 110°C.

Avantageusement, l'appareil de cuisson conforme à l'invention comprend des moyens pour détecter la présence d'eau dans le récipient coopérant avec un interrupteur pour couper l'alimentation électrique de la résistance lorsque la quantité d'eau est inférieure à un niveau minimum prédéterminé.

La présence d'une quantité d'eau suffisante dans le récipient pour limiter la montée en température de ce dernier constituant une condition essentielle au fonctionnement en toute sécurité de l'appareil selon l'invention, la surveillance de cette quantité d'eau par des moyens de détection coopérant avec des moyens de coupure automatique permet d'éviter la surchauffe de la base et de maintenir ainsi son intégrité.

Dans un mode de réalisation pratique, lesdits moyens de détection sont sensibles au poids du récipient. Au niveau d'eau minimum prédéterminé, c'est-à-dire considéré comme suffisant pour permettre l'alimentation électrique de la résistance chauffante, correspond un poids minimum de sécurité, autrement dit le poids du récipient rempli d'eau jusqu'au niveau minimum. Lorsque le poids du récipient devient inférieur audit poids minimum de sécurité, lesdits moyens de détection réagissent sur l'interrupteur pour couper l'alimentation de la résistance chauffante.

Il est ainsi possible de contrôler la température du récipient métallique en contact avec la base par des moyens sensibles au poids du récipient. Ceux-ci présentent l'avantage de pouvoir être choisis parmi un éventail très large de moyens peu sophistiqués, bon marché et résistants.

Dans un mode de réalisation économique et fiable, lesdits moyens de détection comprennent deux organes de détection complémentaires l'un de l'autre, réagissant de manière inverse, un premier organe tendant à assurer la fermeture du circuit d'alimentation électrique sous l'action d'une première force résultant du poids du récipient, et un second organe exerçant sur ledit premier organe une seconde force de direction opposée à ladite première force et tendant à ouvrir le circuit d'alimentation électrique de l'élément chauffant.

Concrètement, un premier organe de détection peut être constitué par un levier en un matériau conducteur connecté par une extrémité à l'élément chauffant et adapté à venir en contact par l'autre extrémité, sous le poids du récipient, avec les bornes d'un interrupteur, un second organe de détection étant constitué par un ressort hélico dal taré de manière à maintenir ledit levier écarté desdites bornes lorsque le poids du récipient est inférieur au poids minimum prédéterminé, considéré comme poids minimum de sécurité.

D'autres particularités et avantages de l'invention apparaîtront encore dans la description ci-après.

Aux dessins annexés donnés à titre d'exemple non limitatif,
- la figure 1 est une vue schématique en coupe verticale d'un appareil électrique de cuisson conforme à l'invention ;
- la figure 2 est une vue agrandie du boîtier d'alimentation électrique de la figure 1, montrant un premier mode de réalisation des moyens de détection sensibles au poids du récipient;
- les figures 3A, 3B, 3C sont des vues schématiques successives de l'état des moyens de détection en fonction du poids du récipient, dans un second mode de réalisation.

L'appareil représenté est un barbecue qui, succinctement, comprend une partie active 1 permettant la cuisson des aliments, un bloc d'alimentation électrique 2 et un support 3.

La partie active 1 comprend une grille métallique 4 adaptée à supporter les aliments à cuire, disposée au-dessus d'un récipient métallique 5 de collecte des jus de cuisson. Sous la grille 4 s'étend une résistance électrique chauffante 6. La chaleur émise par cette dernière est rayonnée vers la grille 4 grâce à un revêtement réflecteur 7 couvrant les parois intérieures du récipient 5. L'alimentation électrique de la résistance 6 est commandée par des moyens de commutation automatique logés dans le boîtier d'alimentation 2, destinés à éviter une surchauffe de la partie du support 3 en contact avec le récipient métallique 5, plus précisément de la base 30.

On va maintenant décrire les particularités de cette base 30 avant de présenter les moyens de commutation automatique et leur fonctionnement.

Le support 3 de l'appareil se compose d'une base 30 soutenue par des pieds tubulaires 40. La base 30 est structurellement adaptée à supporter la grille 4, la résistance 6 et le récipient de collecte 5. Elle se présente globalement sous la forme d'un cadre entourant la paroi latérale 51 du récipient métallique 5 de manière à interdire un contact inopiné de l'utilisateur avec le récipient métallique. Moulée en polypropylène, matière plastique bon marché, la base 30 présente les conditions nécessaires à sa fonction de support et de protection contre les risques de brûlure, du fait de ses qualités d'isolant thermique. Toutefois, le propylène ne supporte pas en continu une température supérieure à environ 110°C, seuil bien inférieur à la chaleur rayonnée par la résistance 6, laquelle doit pouvoir atteindre au moins 200°C si l'on veut saisir par exemple une pièce de viande. Cette faible résistance thermique de la matière choisie est compensée, dans l'appareil représenté, par une combinaison de moyens propre à l'invention.

Ces moyens sont de nature structurelle, tenant à une conception judicieuse de la fonction de support de la base 30 à l'égard du récipient métallique 5, et de nature mécanique dans l'exemple de réalisation représenté, tenant à la présence d'eau en quantité suffisante dans le récipient 5 et à sa détection pour une coupure automatique de l'alimentation électrique en cas de quantité insuffisante.

Le cadre 30 constitué par ladite base présente, du côté intérieur c'est-à-dire du côté du récipient 5, un profil en escalier constitué par un premier épaulement 31 adapté à recevoir une partie périphérique limitée du fond du récipient, plus précisément une partie située à la jonction entre la paroi de fond 50 et la paroi latérale 51. La majeure partie du fond reste ainsi exposée à l'air libre. Un second épaulement 32 prolonge ledit premier épaulement 31, en retrait de ce dernier, de manière à ménager un espace d'air entre la partie de la paroi latérale 51 située au-dessus du premier épaulement 31 et la base 30. La base 30 supporte ainsi le récipient métallique 5 par un contact sur une surface limitée, tandis qu'une circulation d'air est assurée autour du récipient 5, sur la majeure partie de son fond 50 et de sa paroi latérale 51, contribuant à éviter la surchauffe de la base 30.

Complémentairement à cette disposition structurelle, des moyens mécaniques associés à des moyens électriques permettent de limiter la montée en température de la partie de fond 50, 51 en contact avec la base 30. A cette fin, le récipient 5 est rempli d'eau jusqu'à un niveau minimum N déterminé par la hauteur de la partie de fond 50, 51 en contact avec ladite base 30. En d'autres termes, le niveau minimum d'eau N correspond au moins au niveau supérieur S dudit premier épaulement 31, atteignant le second épaulement 32 dans l'exemple représenté. Ainsi les parois du récipient métallique 5 sont-elles maintenues à une température ne dépassant pas environ 100°C, température maximale de l'eau contenant éventuellement des jus de cuisson.

Ce niveau d'eau minimum N est critique pour éviter une surchauffe de la base 30 qui, on l'a vu, ne peut supporter en continu une température nettement supérieure à la température d'ébullition de l'eau.

L'appareil comporte donc des moyens de détection et de coupure automatiques qui vont maintenant être décrits en détail.

Le boîtier d'alimentation 2 comprend un interrupteur 8, 80 présentant des bornes 9, 90 au niveau desquelles se fait la fermeture ou l'ouverture du circuit d'alimentation de la résistance chauffante 6, selon que la quantité d'eau dans le récipient 5 est suffisante ou non, c'est-à-dire supérieure ou inférieure au niveau d'eau minimum N requis.

La quantité d'eau contenue fait naturellement varier le poids du récipient 5, lequel est contrôlé par deux organes de détection complémentaires l'un de l'autre dans la mesure où ils réagissent de manière inverse au poids du récipient pour soit ouvrir soit fermer le circuit d'alimentation.

Un premier organe de détection est constitué par un levier pivotant 10, 100 dont une première extrémité 10a, 100a est en contact avec le récipient 5, une seconde extrémité 10b, 100b étant adaptée à venir en contact avec une borne 9, 90 d'un interrupteur 8, 80 pour fermer le circuit d'alimentation vers la résistance 6. Un second organe de détection est constitué par un ressort hélico dal 11, 110, solidaire d'une paroi de la base 30, plus précisément du boîtier 2, et du levier 10, 100, et taré de manière à maintenir ladite seconde extrémité de levier 10b, 100b écartée de la borne 9, 90, lorsque le poids du récipient 5 est inférieur au poids minimum P requis, lequel correspond au poids du récipient rempli d'eau jusqu'au niveau minimum N.

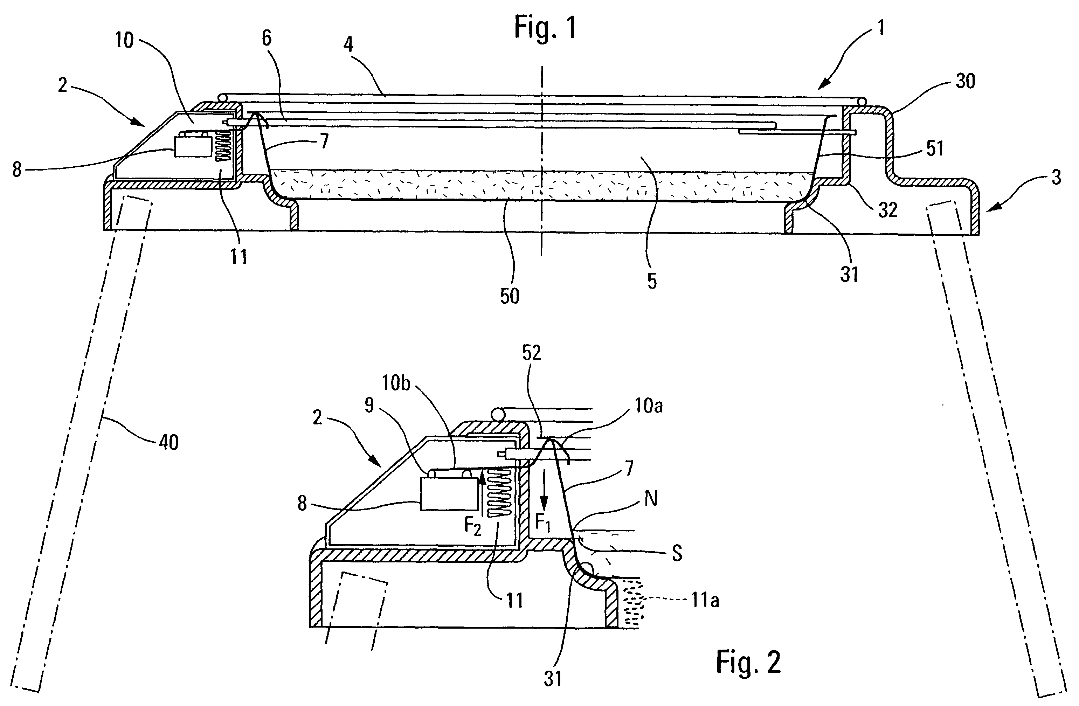

En référence au premier mode de réalisation représenté à la figure 2, le levier 10 pivote autour d'un point fixe.

En service, le récipient 5 rempli d'eau au moins jusqu'au niveau minimum requis N prend appui par son rebord supérieur 52 sur le levier 10, l'extrémité 10b de ce dernier venant alors en contact avec la borne 9 de l'interrupteur 8, vainquant la résistance du ressort hélico dal 11 en le comprimant. Le circuit d'alimentation est alors fermé et l'élément chauffant 6 peut remplir sa fonction. Si, par suite de l'évaporation de l'eau ou d'un oubli de l'utilisateur lors de la mise sous tension de l'appareil, le poids du récipient est inférieur au poids minimum P prédéterminé, le ressort hélico dal 11, insuffisamment chargé c'est-à-dire insuffisamment comprimé par le levier 10, reprend sa forme initiale, maintenant à l'écart de la borne 9 de l'interrupteur 8 l'extrémité 10b du levier 10. Le circuit ouvert, l'alimentation de la résistance chauffante 6 est coupée, prévenant ainsi toute surchauffe de la base 30.

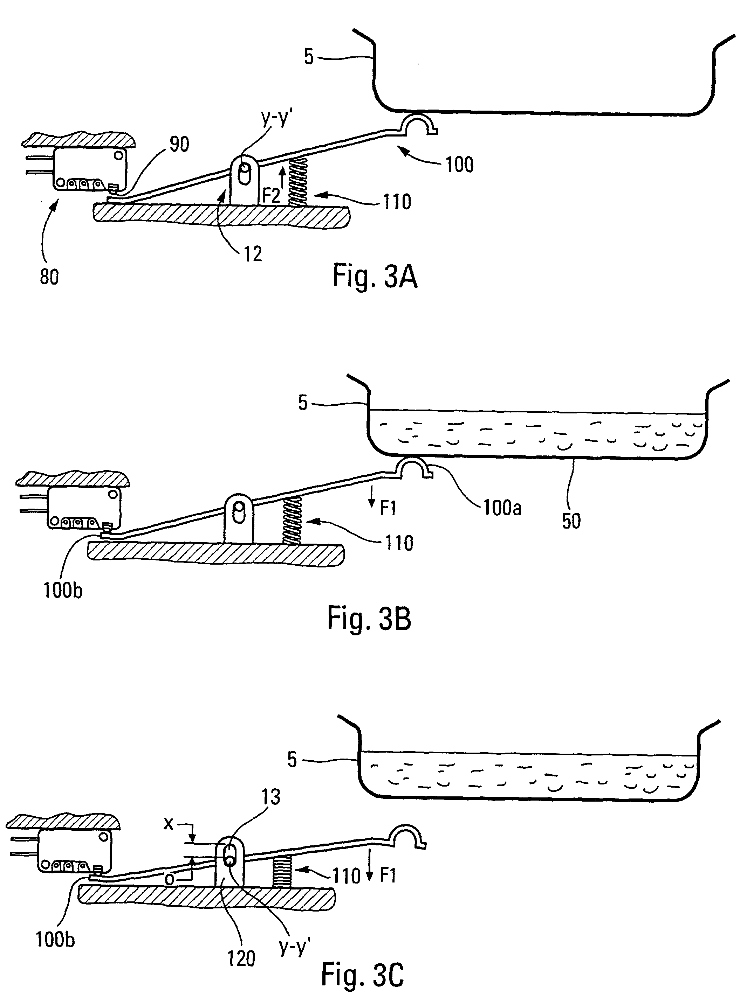

En référence au second mode de réalisation représenté aux figures 3A, 3B, 3C, le levier 100 comporte une première extrémité 100a en contact avec le fond 50 du récipient 5 et une seconde extrémité 100b qu'un ressort 110 maintient normalement écartée de la borne 90 d'un micro-switch 80.

Le levier 100 pivote autour d'un axe transversal Y-Y' monté dans un support 12 qui peut être moulé de manière intégrale avec une paroi de la base 30 et qui comporte deux parois parallèles 120 dont l'écartement correspond sensiblement à la largeur du corps du levier 100. Chacune des deux parois 120 présente une fenêtre ou canal oblong 13 de réception d'une branche dudit axe Y-Y' pour un guidage sensiblement vertical de ce dernier.

L'axe Y-Y' est en effet mobile relativement au support 12 entre une position haute x et une position basse o, de manière à pouvoir contraindre le ressort 110 en fonction du poids du récipient 5.

En l'absence d'eau dans le récipient ou lorsqu'elle est en quantité insuffisante, comme illustré à la figure 3A, le ressort 110 n'est pas sollicité par le poids du récipient 5, de sorte que la seconde extrémité de levier 100b reste écartée de la borne d'alimentation 90 du micro-switch 80.

Lorsque de l'eau est en quantité suffisante dans le récipient 5, comme représenté aux figures 3B et 3C, le poids du récipient exerce une force F1 qui a pour effet de comprimer le ressort 110 et de faire pivoter le levier 100 dont la seconde extrémité 100b vient en contact avec la borne 90 du micro-switch 80 pour alimenter la résistance.

En fonction du poids du récipient 5, c'est-à-dire de la quantité d'eau et de jus de cuisson qui s'y trouve, l'axe Y-Y' reste en position haute x comme illustré à la figure 3B ou passe en position basse o comme illustré à la figure 3C. Dans cette dernière position, l'abaissement sensible de l'axe Y-Y' du levier 100 sous le poids du récipient 5 s'accompagne d'une forte compression du ressort 110.

Cette mobilité verticale de l'axe Y-Y' suivant une cote comprise entre o et x constitue une garde pour le déclenchement du micro-switch, l'extrémité de levier 100b restant plus longtemps en contact avec la borne 80 au fur et à mesure que diminue la quantité d'eau dans le récipient 5, comme le montre le passage d'état des organes de détection de la figure 3C à la figure 3B.

Cette mobilité verticale permet par ailleurs que l'extrémité de levier 100b en contact avec la borne 80 ne soit pas exagérément sollicitée par une quantité d'eau importante dans le récipient 5.

Quel que soit le mode de réalisation des moyens de détection du niveau d'eau dans le récipient, on comprend aisément que le poids du récipient 5 exerce sur le levier 10, 100 une force verticale F₁ de direction opposée à la force verticale F₂ exercée par le ressort comprimé 11, 110 reprenant sa forme initiale. Lorsque F₁ est supérieure à F₂, le circuit d'alimentation est fermé. Lorsque F₂ est supérieure à F₁, le circuit d'alimentation est ouvert.

Dans ce dernier cas, non seulement l'élément chauffant 6 n'est plus alimenté, mais l'écartement du levier 10, 100 de la borne 9, 90 de l'interrupteur 8, 80 sous l'action du ressort 11, 110 a pour effet de soulever légèrement le rebord 52 du récipient, dégageant du côté du boîtier 2 le fond 50, 51 du récipient de son contact avec l'épaulement 31 de la base. Du fait de l'inclinaison du récipient 5, le niveau d'eau baignant encore le fond 50, 51 du récipient augmente du côté opposé au boîtier 2. La coupure électrique se double ainsi d'un effet mécanique favorisant le refroidissement de la base 30.

L'invention permet ainsi l'utilisation d'une matière première économique pour la base de l'appareil de cuisson, sans qu'il soit nécessaire de prévoir une autre matière pour les épaulements se trouvant en contact direct avec le récipient métallique. La sécurité est néanmoins préservée et les moyens de coupure automatique n'affectent nullement le mode de cuisson des aliments pourvu qu'une quantité d'eau suffisante soit présente dans le récipient de collecte des jus de cuisson.

On s'est attaché à décrire un interrupteur coopérant avec des organes de détection purement mécaniques, dont l'avantage est constitué par une simplicité de structure, un faible coût et une parfaite fiabilité du fait de leur relation directe avec le récipient métallique 5 dont il s'agit de contrôler la température. Des trois éléments supportés par la base isolante 30, le récipient est en effet celui qui présente avec elle la surface de contact la plus grande, bien que limitée.

Il va de soi cependant que des variantes pourraient être envisagées sans sortir du cadre de l'invention. En particulier, un ressort travaillant à la traction pourrait être substitué aux ressorts décrits travaillant à la compression.

Au lieu du ressort 11 prévu par le premier mode de réalisation, un ressort 11a pourrait être disposé sous le fond 50 du récipient 5.

La caractéristique d'un axe de pivotement mobile verticalement comme décrit en référence au second mode de réalisation pour un levier en contact avec le fond du récipient, pourrait être appliqué à un levier en contact avec un bord supérieur du récipient, comme prévu par le premier mode de réalisation.

Enfin, des moyens équivalents au levier et au ressort, qu'ils soient purement mécaniques ou associés à de l'électronique, pourraient être prévus pour détecter la quantité d'eau dans le récipient.

## Revendications

1. Appareil électrique de cuisson comprenant une grille (4) de support des aliments à cuire, une résistance électrique chauffante (6) s'étendant sous la grille (4), un récipient métallique (5) de collecte des jus de cuisson, disposé sous la résistance (6), dont les parois intérieures ont des propriétés réflectrices, et une base (30) en matière thermiquement isolante pour supporter la grille (4), la résistance (6) et le récipient de collecte (5), **caractérisé en ce que** le récipient (5) contient, lorsque l'appareil est en service, une certaine quantité d'eau, **en ce que** la base (30) entoure la paroi latérale (51) du récipient et est en une matière plastique qui ne supporte pas en continu la chaleur rayonnée par la résistance et **en ce que** la périphérie du fond (50) du récipient repose directement sur un ou plusieurs épaulements (31) formés dans la base (30).

2. Appareil de cuisson conforme à la revendication 1, **caractérisé en ce qu'**il comprend des moyens (10, 100 ; 11, 110) pour détecter la présence d'eau dans le récipient coopérant avec un interrupteur (8, 80) pour couper l'alimentation électrique de la résistance (6) lorsque la quantité d'eau est inférieure à un niveau minimum (N) prédéterminé.

3. Appareil de cuisson conforme à la revendication 2, **caractérisé en ce que** lesdits moyens de détection (10, 100; 11, 110) sont sensibles au poids du récipient (5).

4. Appareil de cuisson conforme à la revendication 3, **caractérisé en ce que** lesdits moyens de détection comprennent deux organes (10, 100 ; 11, 110) complémentaires l'un de l'autre, réagissant en sens inverse, un premier organe (10, 100) tendant à assurer la fermeture du circuit d'alimentation électrique sous l'action d'une première force (F₁) résultant du poids du récipient, et un second organe (11, 110) exerçant sur ledit premier organe (10, 100) une seconde force (F₂) de direction opposée à ladite première force (F₁) et tendant à ouvrir le circuit d'alimentation électrique de l'élément chauffant (6).

5. Appareil de cuisson conforme à la revendication 4, **caractérisé en ce que** l'ouverture du circuit d'alimentation sous l'action dudit second organe de détection (11, 110) s'accompagne d'un dégagement au moins partiel du fond (50, 51) du récipient (5) de ladite base (30).

6. Appareil de cuisson conforme à l'une des revendications 4 ou 5, **caractérisé en ce que** ledit premier organe de détection est constitué par un levier pivotant (10, 100) dont une première extrémité (10a, 100a) est en contact avec le récipient (5) et une seconde extrémité (10b, 100b) est adaptée à venir en contact avec une borne (9, 90) d'un interrupteur (8, 80), et **en ce que** ledit second organe de détection est un ressort (11, 110) solidaire dudit levier (10, 100) et d'une paroi de ladite base (30) et taré de manière à maintenir ladite seconde extrémité de levier (10b, 100b) écartée de la borne (9, 90) lorsque le poids du récipient (5) est inférieur à un poids minimum (P) prédéterminé considéré comme poids minimum de sécurité.

7. Appareil de cuisson conforme à la revendication 6, **caractérisé en ce que** le levier (100) pivote autour d'un axe transversal (Y-Y') monté dans un support (12) et mobile relativement à ce dernier entre une position haute (x) dans laquelle le ressort (110) est peu ou pas sollicité par le poids du récipient (5), ladite seconde extrémité de levier (100b) étant alors respectivement en contact ou non avec ladite borne d'alimentation (90), et une position basse (o) dans laquelle le ressort (110) est fortement sollicité par le poids du récipient (5), ladite seconde extrémité de levier (100b) étant en contact avec ladite borne d'alimentation (90).

8. Appareil de cuisson conforme à la revendication 7, **caractérisé en ce que** ledit support (12) de l'axe transversal (Y-Y') comporte deux parois parallèles (120) dont l'écartement correspond sensiblement à la largeur du corps du levier (100) et présentant chacune une ouverture oblongue (13) de réception d'une branche dudit axe transversal (Y-Y') pour un guidage sensiblement vertical de ce dernier.

9. Appareil de cuisson conforme à l'une des revendications 1 à 8, **caractérisé en ce que** ladite base (30) est en une matière plastique ne supportant pas en continu une chaleur supérieure à environ 110°C.

10. Appareil de cuisson conforme à la revendication 9, **caractérisé en ce que** ladite base (30) est en polypropylène.

11. Appareil de cuisson conforme à l'une des revendications 1 à 10, **caractérisé en ce que** ladite base (30) est réalisée sous la forme d'un cadre présentant du côté intérieur un épaulement (31) adapté à recevoir la périphérie du fond (50) du récipient, la majeure partie de ce fond (50) restant exposée à l'air.

12. Appareil de cuisson conforme à l'une des revendications 1 à 11, **caractérisé en ce que** la partie de la paroi latérale (51) du récipient située au-dessus du ou des épaulements (31) est séparée de la base (30) par un espace d'air.

13. Barbecue conforme à l'une des revendications 1 à 12.

## Claims

1. Electric cooking utensil comprising a grid (4) for supporting the food that is to be cooked, an electric resistive heating element (6) extending under the grid (4), arranged under the resistive element (6) for collecting the cooking juices a metal container (5) the interior walls of which have reflective properties, and a base (30) made of a thermally insulating material for supporting the grid (4), the resistive element (6) and the collection container (5); **characterized in that**, when the utensil is in use, the container (5) contains a certain amount of water; **in that** the base (30) surrounds the side wall (51) of the container and is made of a plastic which will not continuously withstand the heat radiated by the resistive element; and **in that** the periphery of the bottom (50) of the container rests directly on one or more shoulders (31) formed in the base (30).

2. Cooking utensil according to Claim 1, **characterized in that** it comprises means (10, 100; 11, 110) for detecting the presence of water in the container, collaborating with a switch (8, 80) to cut off the electrical power supply to the resistive element (6) when the amount of water is below a predetermined minimum level (N).

3. Cooking utensil according to Claim 2, **characterized in that** the said detection means (10, 100; 11, 110) are sensitive to the weight of the container (5).

4. Cooking utensil according to Claim 3, **characterized in that** the said detection means comprise two members (10, 100; 11, 110) that complement one another, reacting in opposite senses, a first member (10, 100) tending to make the electrical supply circuit under the action of a first force (F₁) resulting from the weight of the container, and a second member (11, 110) exerting on the said first member (10, 100) a second force (F₂) in the opposite direction to the said first force (F₁) and tending to break the electrical supply circuit to the heating element (6).

5. Cooking utensil according to Claim 4, **characterized in that** the breaking of the supply circuit under the action of the said second detection member (11, 110) is accompanied by at least partial disengagement of the bottom (50, 51) of the container (5) from the said base (30).

6. Cooking utensil according to one of Claims 4 and 5, **characterized in that** the said first detection member consists of a pivoting lever (10, 100) a first end (10a, 100a) of which is in contact with the container (5) and a second end (10b, 100b) of which is designed to come into contact with a terminal (9, 90) of a switch (8, 80), and **in that** the said second detection member is a spring (11, 110) secured to the said lever (10, 100) and to a wall of the said base (30) and rated so as to keep the said second end of the lever (10b, 100b) away from the terminal (9, 90) when the weight of the container (5) is below a predetermined minimum weight (P) considered to be the minimum safe weight.

7. Cooking utensil according to Claim 6, **characterized in that** the lever (100) pivots about a transverse axis (Y-Y') mounted in a support (12) and able to move relative to the latter between an up position (x) in which the spring (110) is stressed little if at all by the weight of the container (5), the said second end of the lever (100b) then being respectively in contact with or not in contact with the said supply terminal (90), and a down position (o) in which the spring (110) is highly stressed by the weight of the container (5), the said second end of the lever (100b) being in contact with the said supply terminal (90).

8. Cooking utensil according to Claim 7, **characterized in that** the said support (12) of the transverse axis (Y-Y') comprises two parallel walls (120), the separation of which corresponds roughly to the width of the body of the lever (100) and each having an oblong opening (13) for accommodating one branch of the said transverse axis (Y-Y') for roughly vertical guidance thereof.

9. Cooking utensil according to one of Claims 1 to 8, **characterized in that** the said base (30) is made of a plastic which does not continuously withstand heat in excess of about 110°C.

10. Cooking utensil according to Claim 9, **characterized in that** the said base (30) is made of polypropylene.

11. Cooking utensil according to one of Claims 1 to 10, **characterized in that** the said base (30) is produced in the form of a frame having, on the inside, a shoulder (31) designed to accommodate the periphery of the bottom (50) of the container, most of this bottom (50) remaining exposed to the air.

12. Cooking utensil according to one of Claims 1 to 11, **characterized in that** the part of the side wall (51) of the container that lies above the shoulder or shoulders (31) is separated from the base (30) by an air gap.

13. Barbecue according to one of Claims 1 to 12.

## Patentansprüche

1. Elektrisches Kochgerät welches folgendes aufweist: einen Auflagerost (4) für die zu garenden Nahrungsmittel, einen sich unter dem Rost (4) erstreckenden Heizwiderstand (6), einen unter dem Widerstand (6), dessen Innenwände Reflektionseigenschaften aufweisen, angeordneter Metallbehälter zum Auffangen des Garsaftes, und einen Untersatz (30) aus wärmeisolierendem Material zum Halten des Rostes (4), des Widerstandes (6) und des Auffangbehälters (5), **dadurch gekennzeichnet, daß** der Behälter (5), wenn sich das Gerät im Betrieb befindet, eine gewisse Wassermenge aufweist, daß der Untersatz (30) die Seitenwand (51) des Behälters umgibt und aus einem Kunststoff besteht, welcher die vom Widerstand abgestrahlte Wärme nicht ununterbrochen erträgt, und daß der Umfang des Bodens (50) des Behälters direkt auf einer bzw. mehreren in dem Untersatz (30) ausgebildeten Schultern (31) aufliegt.

2. Kochgerät nach Anspruch 1, **dadurch gekennzeichnet, daß** es Mittel (10, 100; 11, 110) zur Detektion von Wasser im Behälter aufweist, welche mit einem Schalter (8, 80) zusammenwirken, um die Stromzufuhr des Widerstandes (6) zu unterbrechen, wenn die Wassermenge unterhalb eines vorbestimmten Mindestniveaus liegt (N).

3. Kochgerät nach Anspruch 2, **dadurch gekennzeichnet, daß** die Detektionsmittel (10, 100; 11, 110) empfindlich gegenüber dem Gewicht des Behälters (5) reagieren.

4. Kochgerät nach Anspruch 3, **dadurch gekennzeichnet, daß** die Detektionsmittel sich ergänzende , entgegengesetzt wirkende Organe (10, 100; 11, 110) aufweisen, wobei ein erstes Organ (10, 100) dazu neigt, das Schließen der elektrischen Stromzufuhr unter der Wirkung einer ersten, vom Gewicht des Behälters herrührenden Kraft (F₁) hervorzurufen und ein zweites Organ (11, 110) eine entgegen der ersten Kraft (F₁) gerichtete zweite Kraft (F₂) auf das besagte erste Organ (10, 100) ausübt und dazu neigt, die elektrische Stromzufuhr des Heizelementes (6) zu öffnen.

5. Kochgerät nach Anspruch 4, **dadurch gekennzeichnet, daß** die Öffnung der elektrischen Stromzufuhr unter der Wirkung des zweiten Detektionsorgans (11, 110) mindestens von einer teilweisen Freisetzung des Bodens (50, 51) des Behälters (5) des Untersatzes (30) begleitet wird.

6. Kochgerät nach einem der Ansprüche 4 oder 5, **dadurch gekennzeichnet daß** das erste Detektionsorgan aus einem Schwenkhebel besteht (10, 100), dessen eines Ende (10a, 100a) mit dem Behälter (5) in Kontakt ist und dessen zweites Ende (10b, 100b) dazu angepasst ist, mit einer Klemme (9, 90) eines Schalters ( 8, 80) in Kontakt zu treten, und dadurch daß das zweite Detektionsorgan eine mit dem Hebel (10, 100) und einer Wand des Untersatzes (30) einstückige, so austarierte Feder (11, 110) ist, daß das zweite Ende des Hebels (10b, 100b) von der Klemme (9, 90) entfernt gehalten wird, wenn das Gewicht des Behälters (5) unterhalb eines als Mindestsicherheitsgewicht angesehenen vorbestimmten Mindestgewichts (P) liegt.

7. Kochgerät nach Anspruch 6, **dadurch gekennzeichnet, daß** der Hebel (100) um eine in einer Halterung (12) montierte Querachse (Y-Y') schwenkt, wobei die Achse zwischen einer oberen Stellung (x), in der die Feder wenig oder gar nicht vom Gewicht des Behälters (5) beansprucht wird, in Bezug auf die Halterung beweglich ist, wobei das zweite Ende des Hebels (100b) jeweils im Kontakt mit der Stromzuführungsklemme (90) ist oder nicht, und einer unteren Stellung (o), in der die Feder (110) stark durch das Gewicht des Behälters (5) belastet wird, wobei das zweite Ende des Hebels (100b) in Kontakt mit der Stromzuführungsklemme (90) ist.

8. Kochgerät nach Anspruch 7, **dadurch gekennzeichnet, daß** die Halterung (12) der Querachse (Y-Y') zwei parallele Wände (120) aufweist, deren Abstand im wesentlichen der Breite des Hebelkörpers (100) entspricht, und wobei jede Wand eine längliche Öffnung (13) zur Aufnahme eines Armes der Querachse (Y-Y') für deren im wesentlichen vertikale Führung aufweist.

9. Kochgerät nach einem der Ansprüche 1 bis 8, **dadurch gekennzeichnet, daß** der Untersatz (30) aus einem Kunststoff ist, der eine Wärme oberhalb von 110°C nicht andauernd aushält.

10. Kochgerät nach Anspruch 9, **dadurch gekennzeichnet, daß** der Untersatz aus Polypropylen besteht.

11. Kochgerät nach einem der Ansprüche 1 bis 10, **dadurch gekennzeichnet, daß** der Untersatz (30) in der Form eines Rahmens ausgeführt ist, welcher auf der Innenseite eine Schulter (31) aufweist, die dazu geeignet ist, den Umfang des Behälterbodens (50) aufzunehmen, wobei der obere Teil dieses Bodens (50) der Luft ausgesetzt bleibt.

12. Kochgerät nach einem der Ansprüche 1 bis 11, **dadurch gekennzeichnet, daß** der Teil der Seitenwand (51) des Behälters, welche über der Schulter bzw. den Schultern (31) gelegen ist, von dem Untersatz (30) durch einen Luftspalt getrennt ist.

13. Bratrost nach einem der Ansprüche 1 bis 12.
